# EUROPÄISCHE PATENTSCHRIFT

(11) **EP 2 844 714 B1**
(45) Veröffentlichungstag und Bekanntmachung des Hinweises auf die Patenterteilung: **23.06.2021**
(21) Anmeldenummer: 13723709.5
(22) Anmeldetag: 02.05.2013
(51) Int. Cl.: C09J 201/10

(54) **ZWEI-KOMPONENTEN SCHMELZKLEBSTOFF**
TWO-COMPONENT HOT-MELT ADHESIVE
COLLE BINAIRE THERMOFUSIBLE

(30) Priorität: 03.05.2012 DE 102012207333
(43) Veröffentlichungstag der Anmeldung: 11.03.2015
(73) Patentinhaber: Henkel AG & Co. KGaA, 40589 Düsseldorf (DE)
(72) Erfinder: KOHL, Matthias, Rocky Hil, Connecticut 06067 (US); PRÖBSTER, Manfred, 69226 Nußloch (DE)
(86) Internationale Anmeldenummer: PCT/EP2013/059165
(87) Internationale Veröffentlichungsnummer: WO 2013/164413

(56) Entgegenhaltungen:
- WO-A1-97/48778
- WO-A1-2006/128883
- WO-A1-2011/152002
- US-A1- 2009 291 238
- None

## Beschreibung

Die Erfindung betrifft bei Raumtemperatur feste Zwei-Komponenten Schmelzklebstoffe, die durch hydrolysierbare Silangruppen vernetzen. Die Erfindung betrifft weiter ein Verfahren zum Verkleben mit reaktiven 2K-Schmelzklebstoffen.

Feuchtigkeitshärtende elastische Kleb- und Dichtstoffe werden in der Industrie in weiten Bereichen verwendet. Dabei ist es gewünscht, dass diese Verklebungen auf unterschiedlichen Substraten durchgeführt werden können, ohne dass eine Vorbehandlung durch einen Primer oder durch physikalische Methoden durchgeführt werden müssen. Solche Kleb- und Dichtstoffe auf Basis Silan-vernetzenden Prepolymeren sind bekannt. Diese benötigen zur Vernetzung Wasser und zur Beschleunigung der Reaktion einen Katalysator. Wasser kann durch Diffusion in die aufgetragenen Massen eindringen, dabei ist die Vernetzungsgeschwindigkeit durch Menge und Diffusionsweg des Wassers begrenzt.

In der EP2089490 werden einkomponentige Kleb- und Dichtstoffmassen beschrieben, die aus einem Silan-funktionellen Polyoxyalkylenprepolymer und einem silanfunktionellen Polyolefin besteht. Zu dieser Masse werden verschiedene Additive zugegeben, beispielsweise die bekannten Sn- und andere Schwermetallkatalysatoren. Diese Zusammensetzungen sind hochviskos.

WO2010/139611 beschreibt 1K- oder 2K-Klebstoffe, die über Silan-funktionalisierte Polymere vernetzen. Es werden auch zusätzliche Verbindungen zugesetzt, die Silangruppen aufweisen. Erfindungsgemäß sind diese Zusammensetzungen aber frei von Schwermetall-Katalysatoren. Weiterhin werden dort fließfähige Materialien beschrieben, die bei Raumtemperatur gemischt werden können.

Klebstoffe gemäß dem Stand der Technik können 2K-Klebstoffe sein. Damit sind die Bestandteile einzeln gut lagerstabil, haben aber den Nachteil, dass sie direkt nach dem Auftragen noch fließfähig sind und so keine belastbare Anfangsverklebung ergeben. Werden feuchtigkeitshärtende 1K-Klebstoffe eingesetzt, können auch Schmelzklebstoffe ausgewählt werden. Diese besitzen einen schnellen ersten Haftungsaufbau, danach wird eine endgültige Vernetzung geschehen. Dabei ist diese von der Diffusionsgeschwindigkeit des Wassers im Klebstoff begrenzt. Werden NCO-vernetzende Systeme eingesetzt, ist es bekannt, dass eine zusätzliche Menge Wasser zu einer Blasenbildung führt, die Funktionsweise der Zusammensetzung wird also verschlechtert.

Aufgabe der vorliegenden Erfindung ist es deshalb, eine Kleb- und Dichtstoffzusammensetzung zur Verfügung zu stellen, die auf Basis von Polymeren mit hydrolisierbaren Silan-Gruppen vernetzen kann, wobei eine 2K-Zusammensetzung vorliegt. Die Zusammensetzung soll eine schnelle Anfangshaftung ergeben, sodass die zu verklebenden Teile zusammengehalten werden. Durch den Zusatz von vernetzenden Verbindungen soll eine schnelle Durchhärtung der Zusammensetzung sichergestellt werden. Weiterhin sollen diese Zusammensetzungen nach dem Vernetzen eine gut haftende und elastische Verbindung der Substrate ergeben.

Die Aufgabe wird gelöst durch eine feuchtigkeitshärtende 2K-Zusammensetzung bestehend aus einer Komponenten A enthaltend mindestens ein Polyoxyalkylen- und/oder Polyacrylat-Prepolymer mit mindestens einer hydrolysierbaren Silangruppe, welches bei Raumtemperatur (25°C) flüssig ist, sowie mindestens ein bei Raumtemperatur (25°C) festes inertes Zusatzmittel mit einem Erweichungspunkt von 40 bis 150 °C (gemessen nach DIN ISO 4625), ausgewählt aus Kohlenwasserstoffen, Polyestern oder Polyamiden, sowie einer Komponente B, die eine Viskosität von 5000 bis 800000 mPas bei 25°C (gemessen nach Brookfield, EN ISO 2555) aufweist, enthaltend mindestens eine für die Prepolymere vernetzende Verbindung, wobei in einer oder beiden Komponenten Hilfsstoffe und Additive enthalten sein können, wobei die 2K-Zusammensetzung und Komponente A Schmelzklebstoff-Eigenschaften aufweisen, wobei die Zusammensetzung metallkatalysatorfrei ist und die Komponente B enthält:
- 0 bis 30 Gew.-% einer oder mehrerer Silan-vernetzbarer Verbindungen,
- 2 bis 60 Gew.-% wasserabsorbierende Substanzen,
- 10 bis 60 Gew.-% Hilfsstoffe und Additive,
- 0,5 bis 15 Gew.-% Wasser,
wobei die Summe 100 % betragen soll.

Bevorzugte Ausführungsformen und Anwendungen sind in den nachgeordneten Ansprüchen angegeben.

Ähnliche Zusammensetzungen werden offenbart in der WO97/48778, in der WO2006/128883, in der US2009/291238 und in der WO2011/152002: WO97/48778 offenbart eine Zusammensetzung enthaltend 20 - 70 Gew.-% eines Polyisobutylens, hydrierten Polybutadiens oder Polyolefins mit mindestens einer hydrolysierbaren Silangruppe, 5 - 30 Gew.-% Butylkautschuk, und 5 - 30 Gew.-% eines Polyolefins, wobei in einer Ausführungsform diese Zusammensetzung die Komponente A einer feuchtigkeitshärtenden 2K-Zusammensetzung bildet, und es sich bei der Komponente B dieser feuchtigkeitshärtenden 2K-Zusammensetzung um eine wasserhaltige Paste handelt. WO2006/128883 offenbart eine feuchtigkeitshärtende 2K-Zusammensetzung bestehend aus einer Komponente A sowie einer Komponente B. Die Komponente A beinhaltet ein Prepolymer mit feuchtigkeitsreaktiven Gruppen, etwa ein Polyoxyalkylen-Prepolymer mit hydrolysierbaren Silangruppen, insbesondere Alkoxysilangruppen. Es wird betont, dass dieses Prepolymer bei Raumtemperatur fest ist. Als weiteren Bestandteil kann die Komponente A ferner nicht reaktive thermoplastische Materialien enthalten, wie etwa Polyethylen. Bei der Komponente B handelt es sich um eine wasserhaltige Paste, die neben Wasser ein wasserabsorbierendes Trägermaterial enthält, entweder in Form eines organischen Polymers mit ionischen Gruppen, oder aber in Form anorganischer Füllstoffe. Weiters sind Katalysatoren zugegen, welche die Hydrolyse und/oder Vernetzung von Alkoxysilangruppen katalysieren. Beispielhaft genannt werden Titanate. US2009/291238 offenbart eine Zusammensetzung enthaltend 10 - 65 Gewichtsteile eines elastomeren Polymers mit hydrolysierbaren Silangruppen, 5 - 25 Gewichtsteile eines Wasser freisetzenden Mittels, sowie optional bis zu 30 Gewichtsteile eines nicht reaktiven elastomeren Polymers. Bei dem elastomeren Polymer mit hydrolysierbaren Silangruppen kann es sich insbesondere um ein Polyolefin mit hydrolysierbaren Silangruppen handeln, während es sich bei dem nicht reaktiven elastomeren Polymer um Kohlenwasserstoffe wie Butylkautschuk handelt. Die Zusammensetzung kann als 1K-Zusammensetzung formuliert werden, oder aber als 2K-Zusammensetzung, bei der beispielsweise das elastomere Polymer mit hydrolysierbaren Silangruppen und ein nicht reaktives elastomeres Polymer in einer Komponente A vorliegen, und das Wasser freisetzende Mittel in einer Komponente B vorliegt. WO2011/152002 offenbart eine Zusammensetzung enthaltend ein Polyoxyalkylen-Prepolymer mit hydrolysierbaren Silangruppen, optional ein Polyacrylat-Prepolymer mit hydrolysierbaren Silangruppen, einen Klebrigmacher wie etwa ein Kohlenwasserstoff-Harz, sowie Metallcarboxylate und/oder Carbonsäuren als die Prepolymere vernetzende Verbindung, womit die Zusammensetzung optional frei von Metallkatalysatoren ist. Zumindest implizit wird deutlich, dass es sich bei den eingesetzten Prepolymeren um bei Raumtemperatur feste Prepolymere handeln muss. Die offenbarte Zusammensetzung kann entweder als 1K-Zusammensetzung formuliert werden, oder aber als 2K-Zusammensetzung, bei der die Metallcarboxylate und/oder Carbonsäuren getrennt von den anderen aufgeführten Bestandteilen vorliegen.

Die erfindungsgemäßen Zusammensetzungen liegen grundsätzlich als 2-Komponenten Schmelzklebstoff-Zusammensetzung vor. Es kann sich um Klebstoffe, Dichtmassen, Vergussmassen oder Beschichtungsmittel handeln, diese sollen in der Wärme aufgetragen werden. Die Komponenten werden getrennt gelagert. Die verschiedenen Anwendungsgebiete unterscheiden sich in den physikalischen Parametern, die der Anwendung angepasst werden können. Die Eigenschaften können über die Additive unterstützt werden, ein wichtiger Bestandteil sind jedoch Molekulargewicht und Aufbau der Polymere sowie die Viskosität. Erfindungsgemäß ist es notwendig, dass die Zusammensetzung mindestens ein reaktives Polymeres enthält, das über Silangruppen vernetzen kann.

Die reaktiven Prepolymere können aus bekannten Polymeren als Rückgrat aufgebaut sein, die eine Anzahl von erfindungsgemäß geeigneten reaktiven Gruppen bei der Synthese aufweisen oder die nachträglich mit solchen Gruppen modifiziert werden. Als Polymere sind nicht vernetzte, insbesondere lineare, Polymere geeignet, erfindungsgemäß Polyoxyalkylene oder Poly-(meth)acrylate. Diese müssen mindestens eine, bevorzugt mindestens zwei hydrolysierbare Silangruppe(n) enthalten.

Eine Gruppe von geeigneten Prepolymeren sind solche auf Basis von Polyetherpolyolen. Diese sind allgemein bekannt. Es kann sich dabei um die bekannten Polyetherpolyole auf Basis von Polyethylenoxid, Polypropylenoxid oder Poly-THF handeln, wobei auch Mischungen mit unterschiedlichen Bausteinen eingesetzt werden können. Insbesondere geeignet sind di- oder trifunktionelle Polyetherpolymere auf Basis von Polypropylenglycol oder Polyethylenglycol. Diese werden beispielsweise an den Endgruppen mit Silangruppen zu den passend funktionalisierten Silan-vernetzenden Prepolymeren umgesetzt. Dazu sind verschiedene Reaktionen bekannt. Das kann beispielsweise über Hydroxylgruppen-haltige Polyetherpolyole erfolgen, die mit Di- oder Polyisocyanaten umgesetzt werden, die dann ihrerseits mit aminofunktionellen Silanen oder mercaptofunktionellen Silanen zu silanterminierten Prepolymeren umgesetzt werden. In einem anderen Verfahren werden die olefinisch ungesättigte Gruppen enthaltenden Polyether mit einem Mercaptosilan wie z.B. 3-Mercaptopropyltrialkoxysilan umgesetzt. Eine andere Arbeitsweise setzt hydroxyfunktionelle Polyether mit ungesättigten Chlorverbindungen um in Polyether mit endständigen olefinischen Doppelbindungen, die ihrerseits mit Hydrosilanverbindungen, die hydrolysierbare Gruppen haben, in einer Hydrosilylierungsreaktion zu silanterminierten Polyethern umgesetzt werden.

Eine andere Ausführungsform der erfindungsgemäßen Zusammensetzung setzt als Prepolymer solche auf Basis von Polyacrylaten ein, die ebenfalls mindestens eine hydrolysierbare Silangruppe an der Polymerkette aufweisen. Es sollen für diese Erfindung darunter Polyacrylate und Polymethacrylate verstanden werden. Die erfindungsgemäß geeigneten Poly(meth)acrylate sind beispielsweise Polymerisationsprodukte von einem oder mehreren Alkyl(meth)acrylatestern mit 1 bis 18 C-Alkoholen. Gegebenenfalls können auch geringe Anteile an (Meth)acrylsäure oder andere copolymerisierbare Monomere, beispielsweise Styrol, Vinylester, Acrylamide, enthalten sein. Insbesondere sind C1- bis C12 -(Meth)Acrylatester geeignet. Solche Polymere sind dem Fachmann bekannt und können auf verschiedene Art und Weise hergestellt werden. Erfindungsgemäß geeignete (Meth)acrylatcopolymere sollen mindestens eine, bevorzugt zwei, insbesondere zwischen 2 und 6 hydrolysierbare Silangruppen aufweisen.

Die Silane können über verschiedene Herstellungsweisen mit dem Polymergrundgerüst gebunden werden. Beispielsweise ist es möglich, Silane, die einen ungesättigten Rest und hydrolisierbare Silangruppen enthalten, einzupolymerisieren. In diesem Fall sind die Silangruppen dann statistisch über die Polymerkette verteilt oder es werden Blockcopolymere erhalten. Eine andere Arbeitsweise arbeitet derart, dass Acrylatpolymere mit ungesättigten Gruppen hergestellt werden, wobei die ungesättigten Doppelbindungen danach mit Silanen umgesetzt werden. In diesem Falle ist es auch möglich, solche ungesättigten Gruppen und damit die Silangruppen endständig am Acrylatcopolymer zu erhalten. Auch über polymeranaloge Reaktionen von beispielsweise OH-Gruppen können Silangruppen anreagiert werden.

Als Silangruppen sind insbesondere Di- oder Tri-alkoxysilangruppen bevorzugt mit C1- bis C4-Alkoxygruppen geeignet. Um eine gute Vernetzung und ausreichende Elastizität zu erhalten, soll die Anzahl der Silangruppen mindestens eine pro Molekül betragen, insbesondere sind jedoch zwei bis vier Gruppen enthalten. In einer besonderen Ausführungsform sind die Silangruppen endständig zu einer Polyetherkette angeordnet. Erfindungsgemäß geeignete funktionalisierte Polymere, namentlich Polyether oder Poly(meth)acrylate, die eine ausreichende Anzahl von Silangruppen aufweisen, sind kommerziell in unterschiedlichen Molekulargewichten oder mit unterschiedlichem Kettenaufbau erhältlich.

In einer bevorzugten Ausführungsform der erfindungsgemäßen Zusammensetzung beträgt das Molekulargewicht (zahlenmittleres Molekulargewicht, M_{N}, über GPC bestimmt) der Silanfunktionalisierten Prepolymere zwischen 2500 und 75000 g/mol. Weitere besonders bevorzugte Molekulargewichtsbereiche sind 3000 bis 50000 g/mol. Diese Molekulargewichte sind besonders vorteilhaft, da Zusammensetzungen, die Prepolymere mit diesen Molekulargewichten enthalten, Viskositäten aufweisen, die eine gute Verarbeitbarkeit ermöglichen. Ganz besonders bevorzugt werden Prepolymere eingesetzt, die eine Polydispersität D (gemessen als Index M_{W}: M_{N}) von weniger als 2, bevorzugt weniger als 1,5 aufweisen. Die ausgewählten Polyoxyalkylen- oder Poly(meth)-acrylat-prepolymere sind erfindungsgemäß bei Raumtemperatur (25°C) flüssig. Die Mischung der Prepolymere soll eine Viskosität von 5000 bis zu 100.000 mPas aufweisen (gemessen nach Brookfield, EN ISO 2555, 25°C).

Es ist möglich, die Silan-haltigen Prepolymere auf Basis von Polyethern oder Polyacrylaten einzeln, oder mit unterschiedlicher Zusammensetzung oder Molekulargewicht auch im Gemisch einzusetzen. Dabei ist auf die Verträglichkeit der Polymere zu achten. Die Verträglichkeit kann über die Polymere selbst beeinflusst werden, beispielsweise weisen Acrylate mit Anteilen an längerkettigen Alkylacrylaten als Monomerbestandteil verstärkt unpolare Eigenschaften auf.

Als weitere erfindungsgemäß notwendige Komponente ist mindestens ein inertes Zusatzmittel, namentlich mit einem Erweichungspunkt von 40 bis 150 °C (gemessen nach DIN ISO 4625), enthalten. Diese Komponente ist bei Raumtemperatur (25°C) fest. Sie kann aufgeschmolzen werden und erstarrt beim Abkühlen danach schnell wieder. Diese Komponente kann aus festen Polyestern, aus festen Polyamiden und/oder aus festen Kohlenwasserstoffharzen bestehen, die als Polymere oder Oligomere vorliegen können. Es ist möglich, dass diese Zusatzmittel auch noch funktionelle Gruppen enthalten, es sollen jedoch solche inerte Polymere ausgewählt werden, die keine mit den Silangruppen der Polymere reaktive Gruppen aufweisen, insbesondere keine Silangruppen.

Beispiele für erfindungsgemäß einzusetzende Zusatzmittel sind Polyester, auch Polyesterpolyole, mit einem Molekulargewicht (M_{N}) von etwa 500 bis etwa 10.000 g/mol. Es können dabei Polyester eingesetzt werden, die durch Umsetzung von niedermolekularen Alkoholen, insbesondere von Ethylenglykol, Diethylenglycol, Neopentylglycol, Hexandiol, Butandiol, Propylenglykol, Glycerin oder Trimethylolpropan mit Caprolacton entstehen. Ebenfalls als polyfunktionelle Alkohole zur Herstellung von Polyestern geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Geeignete Polyester sind durch Polykondensation herstellbar. So können difunktionelle und/oder trifunktionelle Alkohole mit einem Unterschuss an Dicarbonsäuren und/oder Tricarbonsäuren oder deren reaktiven Derivaten zu Polyesterpolyolen kondensiert werden. Geeignete Dicarbonsäuren sind beispielsweise Bernsteinsäure und ihre höheren Homologen mit bis zu 16 C-Atomen, ferner ungesättigte Dicarbonsäuren wie Maleinsäure oder Fumarsäure, sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Besonders geeignete Alkohole sind Hexandiol, Ethylenglycol, Diethylenglycol oder Neopentylglycol oder Gemische aus zwei oder mehr davon. Besonders geeignete Säuren sind Isophthalsäure oder Adipinsäure oder deren Gemisch.

Die Polyester können endständig OH-Gruppen aufweisen, sie können auch Carboxylgruppen enthalten. Es kann sich um lineare Polyester handeln, es ist jedoch auch möglich, verzweigte Polyester einzusetzen. Es kann sich um ein Polymer handeln, es können auch Gemische von Polymeren, die sich in Zusammensetzung oder Molekulargewicht unterscheiden, eingesetzt werden. Die Erweichungstemperatur kann durch die Auswahl der Bestandteile beeinflusst werden. So erhöhen aromatische Anteile die Erweichungstemperatur, verzweigte oder aliphatische Bestandteile vermindern den Erweichungspunkt. Es werden kristalline Polyester bevorzugt.

Eine andere Klasse von erfindungsgemäß geeigneten bei Raumtemperatur festen Zusatzmitteln sind Kohlenwasserstoffharze. Es handelt sich dabei um natürliche, gegebenenfalls auch modifiziert, oder synthetische Polymere. Eine besondere Gruppe geeigneter Kohlenwasserstoffharze sind Polyolefinharze. Die synthetischen Harze werden im Allgemeinen durch Polymerisation oder Polykondensation gewonnen, natürliche Harze können aus Naturprodukten abgetrennt und hergestellt werden. Dabei ist es auch möglich, dass diese durch chemische Reaktionen in ihrer Beschaffenheit modifiziert werden. Beispiele für solche Zusatzmittel sind Pentadien-, Terpen-, Cumaron/Inden-, Furanharze, aliphatische oder alicyclische Petroleum-Kohlenwasserstoffharze und hydrierte Derivate davon, Styrolcopolymerharze oder Harze auf Basis funktioneller Kohlenwasserstoffharze. Diese können einzeln oder als Gemisch eingesetzt werden. Im Sinne dieser Anmeldung wird, soweit nicht ausdrücklich anders angegeben, unter Raumtemperatur 25°C verstanden.

Weiterhin können als feste Zusatzmittel Polyamide eingesetzt werden. Solche Polyamide können beispielsweise hergestellt werden durch Umsetzung von primären Diaminen mit Dicarbonsäuren. Dabei werden die Dicarbonsäuren vorzugsweise in bis zu 10 % stöchiometischem Überschuss gegenüber den Diaminen eingesetzt, so dass Carboxyl - terminierte Polyamide entstehen. Als Dicarbonsäuren sind beispielsweise C2-C14-Dicarbonsäuren geeignet oder auch Dimer- oder Polymerfettsäuren, die in bekannter Weise durch Dimerisierung von aus natürlichen Rohstoffen gewonnen ungesättigten, langkettigen Fettsäuren hergestellt werden und anschließend durch Destillation weitergereinigt werden können. Beispiele für Dicarbonsäuren sind insbesondere Bernsteinsäure, Glutarsäure, Adipinsäure, Pimelinsäure, Korksäure (Suberinsäure), Azelainsäure, Sebacinsäure, Undecandisäure oder Dodecandisäure oder auch aromatische Dicarbonsäuren, wie zum Beispiel Terephthalsäure, sowie Mischungen der vorgenannten Dicarbonsäuren. Insbesondere sind jedoch Polyamide geeignet, deren Säureanteil zumindest zu mehr als 50% aus Dimerfettsäuren besteht, insbesondere nur aus Dimerfettsäuren.

Die Amin-Komponente besteht im Wesentlichen aus einem oder mehreren aliphatischen Diaminen, vorzugsweise mit einer geraden Anzahl an Kohlenstoffatomen, wobei die Aminogruppen an den Enden der Kohlenstoffketten sind. Die aliphatischen Diamine können 2 bis zu 20 Kohlenstoffatome enthalten, wobei die aliphatische Kette linear oder leicht verzweigt sein kann. Die Amin-Komponente kann weiterhin cyclische Diamine oder Polyoxyalkylendiamine, wie zum Beispiel Polyoxyethylendiamine, Polyoxypropylendiamine oder Bis-(di-aminopropyl)-polytetrahydrofuran, enthalten. Über die Auswahl der Amin-Komponente kann Härte und Schmelzpunkt der Polyamide beeinflusst werden. Polyamide mit geeigneten Eigenschaften sind dem Fachmann bekannt und kommerziell erhältlich. Es handelt sich beispielsweise um bei Temperaturen unter 200°C schmelzbare Amide, insbesondere auf Basis von Fettsäuren, es können auch Polyamidwachse oder mikronisierte Polyamide ausgewählt werden.

Der Erweichungspunkt der Zusatzmittel soll zwischen 40 bis 150 °C liegen (gemessen nach ASTM E2867, Ring & Ball). Insbesondere soll der Erweichungspunkt zwischen 60 und 150°C betragen, besonders bevorzugt über 70°C.

Die Menge der festen Zusatzmittel soll von 0,1 bis 20 Gew.-% betragen, insbesondere von 0,5 bis 10 Gew.-%, bezogen auf die Zusammensetzung. Es können einzelne Zusatzmittel eingesetzt werden oder auch Mischungen. Es ist vorteilhaft, wenn die Zusatzmittel fein dispergiert in der Komponente A vorliegen.

Weiterhin enthält die erfindungsgemäße Zusammensetzung Hilfsstoffe und Additive.

Diese können in einer oder in beiden Komponenten vorliegen. Das können beispielsweise Weichmacher, wie Mineralöle, Weißöle, paraffinische Kohlenwasserstoffe, Phthalate oder Adipate sein; Stabilisatoren, wie Antioxidantien, UV-Stabilisatoren oder Hydrolyse-Stabilisatoren; Füllstoffe, Pigmente, wie pyrogene Kieselsäure, Zeolithe, Bentonite, Magnesiumcarbonat, Kieselgur, Tonerde, Ton, Talkum, Schwerspat, Titanoxid, Eisenoxid, Zinkoxid, Sand, Quarz, Flint, Glimmer, Aluminiumpulver, Glaspulver; Verdünner bzw. Reaktivverdünner, Trockenmittel, wie hydrolysierbare Silanverbindungen; Haftvermittler, insbesondere organofunktionelle Silane wie hydroxyfunktionelle, (meth)acryloxyfunktionelle, mercaptofunktionelle, aminofunktionelle oder epoxyfunktionelle Silane; Fungizide, Flammschutzmittel, Katalysatoren, rheologische Hilfsmittel, Farbpigmente oder Farbpasten.

Als Katalysatoren können Verbindungen eingesetzt werden, die die hydrolytische Spaltung der hydrolysierbaren Gruppen der Silangruppierungen, sowie die anschließende Kondensation der Si-OH-Gruppe zu Siloxangruppierungen (Vernetzungsreaktion bzw. Haftvermittlungsfunktion) katalysieren können. Beispiele hierfür sind Aminverbindungen oder ihre Salze mit Carbonsäuren, wie Octylamin, Cyclohexylamin, Benzylamin, Dibutylamin, Monoethanolamin, Triethanolamin, Diethylentriamin, Triethylentetramin, Triethylendiamin, Guanidin, Morpholin, N-methylmorpholin und 1,8-Diazabicyclo-(5,4,0)-undecen-7 (DBU), Silanhaftvermittler mit Aminogruppen. Erfindungsgemäß ist die Zusammensetzung Metallkatalysator-frei; eine Ausführungsform setzt den Katalysator, bevorzugt Mischungen mehrerer Katalysatoren, in einer Menge von 0,01 bis etwa 5 Gew.-% bezogen auf das Gesamtgewicht der Zusammensetzung ein. Bevorzugt sind Mengen von 0,1 bis 4 Gew.-%, besonders bevorzugt weniger als 0,4 bis 3 Gew.-% Katalysator.

Komponente A zeigt erfindungsgemäß Schmelzklebstoffeigenschaften. Sie ist bei 25°C fest, üblicherweise liegt der Erweichungspunkt über 70°C, bevorzugt über 80°C bis zu 150°C. Nach dem Abkühlen bildet sie wieder eine feste Masse, die Klebstoffeigenschaften aufweist und eine Verklebung im Prinzip ermöglicht.

Erfindungsgemäß besteht die Zusammensetzung aus Komponente A und einer weiteren Komponente B. Letztere enthält Verbindungen, die mit den Silangruppen der Prepolymere vernetzen können. Es kann sich dabei um Silan-vernetzbare Polymere handeln, die mindestens zwei reaktive Gruppen aufweisen, die mit den Silangruppen des Prepolymeren der Komponente A reagieren können. Es kann sich beispielsweise ebenfalls um ein Polyether- oder Poly(meth)-acrylatprepolymer mit Silangruppen handeln, diese sollen jedoch fließfähig vorliegen. Es können auch monomere oder oligomere Silanverbindungen enthalten sein. Erfindungsgemäß ist in Komponente B immer Wasser als Vernetzungsmittel enthalten. Um eine gute Mischbarkeit mit der Komponente A zu erhalten, weiterhin um die Lagerstabilität von B sicherzustellen, enthält Komponente B zusätzlich wasserabsorbierende Substanzen.

Es kann sich dabei um polare Flüssigkeiten handeln, beispielsweise hygroskopische Flüssigkeiten, es können auch Füllstoffe mit einem hohen Absorptionsvermögen für Wasser eingesetzt werden, weiterhin sind anorganische oder organische Verdicker geeignet. Auch ist es möglich, dass Wasser teilweise mit Silanverbindungen zu Silanolgruppen vorreagiert haben kann.

Eine Ausführungsform setzt Verdickungsmittel ein, beispielsweise wasserlösliche bzw. wasserquellbare Polymere oder anorganische Verdickungsmittel. Beispiele für organische natürliche Verdickungsmittel sind Agar-agar, Carrageen, Tragant, Gummi arabicum, Alginate, Pektine, Polyosen, Guar-Mehl, Stärke, Dextrine, Gelatine, Casein. Beispiele für organische voll- oder teilsynthetische Verdickungsmittel sind Poly(meth)acrylsäurederivate, Carboxymethylcellulose, Celluloseether, Hydroxyethylcellulose, Hydroxypropylcellulose, Polyvinylether, Polyvinylalkohol, Polyamide, Polyimine. Beispiele für anorganische Verdickungsmittel oder Füllstoffe sind Polykieselsäuren, hochdisperse, pyrogene, hydrophile Kieselsäuren, Tonmineralien wie Montmorillonit, Kaolinit, Halloysit, Aluminiumhydroxid, Aluminiumoxidhydrat, Aluminiumsilikate, Talkum, Quarzmineralien, Kreide, Magnesiumhydroxid oder Molekularsiebe verschiedener Porengröße. Eine andere Ausführungsform setzt Polyole ein, beispielsweise Glycerin oder niedermolekulare Polyethylenglykole. Es können auch Mischungen verschiedener Wasser tragender Verbindungen enthalten sein.

Die Komponente B ist bei Raumtemperatur flüssig oder pastös. Sie weist eine Viskosität von 5000 bis zu 800000 mPas (25°C) auf (gemessen nach Brockfield, EN ISO 2555, 25°C). Die Bestandteile in den einzelnen Komponenten werden bevorzugt so ausgewählt, dass das Verhältnis A : B (Gewicht) von 10: 3 bis 10: 0,1 beträgt. Damit kann eine gute Messbarkeit des Mischungsverhälnisses erhalten werden.

Eine bevorzugte Ausführungsform der Komponente A kann enthalten: 10 bis 50 Gew.-%, bevorzugt 10 bis 40 Gew.-%, eines oder mehrerer Silangruppen-haltiger Prepolymere, namentlich Polyoxyalkylenpolymere und/oder Poly(meth)acrylatpolymer, 0,5 bis 15 Gew.-%, bevorzugt 0,5 bis 10 Gew.-% mindestens eines bei Raumtemperatur festen Zusatzmittels, das keine mit Silangruppen vernetzbare Gruppe aufweist, 5 bis 65 Gew.-%, bevorzugt 20 bis 60 Gew.-% Pigmente und Füllstoffe, sowie 0,01 bis 25 Gew.-% Hilfsstoffe und Additive, insbesondere Haftvermittler; Stabilisatoren und/oder Weichmacher.

Die Gesamtheit aller Bestandteile einer Komponente soll jeweils 100 Gew.-% betragen.

Die erfindungsgemäße Zusammensetzung und ihre Komponenten können durch Mischen der Bestandteile hergestellt werden. Dabei kann es notwendig sein, das Mischen der Bestandteile bei erhöhter Temperatur durchzuführen, sodass eine Schmelze vorliegt. Ebenso ist es möglich, die Zusammensetzung kontinuierlich in einem Extruder herzustellen. Die Reihenfolge der Zugabe und des Vermischens ist von Viskosität, Konsistenz und Menge der einzelnen Bestandteile abhängig. Dabei sollen die Feststoffe in den flüssigen Bestandteilen gleichmäßig dispergiert werden. Eine gute Vermischung ist sicherzustellen, damit keine Separation einzelner Bestandteile auftreten kann. Die Art der Herstellung ist im Prinzip bekannt, der Fachmann kann diese abhängig von der Auswahl der Rohstoffe leicht ermitteln.

Die erfindungsgemäße Zusammensetzung der Komponente A ist fest (25°C), sie stellt einen Schmelzklebstoff dar. Sie bildet gemischt zusammen mit der Komponente B einen Schmelzklebstoff. Dieser hat vorzugsweise eine Erweichungstemperatur von über 60°C. Zweckmäßigerweise sollen die erfindungsgemäßen Zusammensetzungen keine Lösemittel enthalten, die einen Siedepunkt unter 150°C enthalten. Dabei soll die Viskosität des Schmelzklebstoffs beispielsweise bei einer Temperatur zwischen 60 und 120°C von 10 bis 400 Pas betragen. Über die Auftragstemperatur kann die Applikationsviskosität beeinflusst werden. Durch die Auswahl der Komponenten wird ein bei Raumtemperatur fester Klebstoff erhalten, der bei Applikationstemperatur niedrigviskos ist, nach der Applikation abkühlt und dann rasch eine hohe Anfangsfestigkeit ergibt.

Das Mischen der Komponenten A und B kann mit bekannten Vorrichtungen durchgeführt werden. Beispielsweise wird Komponente A aufgeschmolzen. In die Schmelze kann dann beispielsweise mit einem Extruder die Komponente B zudosiert werden. Eine andere Arbeitsweise mischt Komponente B in einem Statikmischer in die Schmelze von A. Dabei kann es auch zweckmäßig sein, die Komponente B zu erwärmen, um eine leichtere Mischbarkeit sicherzustellen. Die Misch- und Applikationstemperatur der 2K-Zusammensetzung soll zwischen 70 und 135°C betragen. Die Temperatur sollte bevorzugt unter 125°C betragen, um ein mögliches Verdampfen und Aufschäumen von Wasser zu vermeiden. Unmittelbar nach dem Mischen kann die Zusammensetzung eingesetzt werden, beispielsweise als Klebstoff oder als Dichtstoff.

Es hat sich gezeigt, dass die erfindungsgemäße Zusammensetzung eine hervorragende Anfangsfestigkeit aufweist. Es ist bekannt, andere hochviskose Klebstoffe aufzutragen, wobei diese durch chemische Reaktion mit den Substraten verkleben. Diese werden jedoch bei Raumtemperatur durch Abkühlen nicht fest, sondern behalten eine Fließfähigkeit bei. Als Konsequenz können miteinander verbundene Teile noch bis zur Vernetzung gegeneinander verschoben werden. Eine erfindungsgemäße Zusammensetzung weist nach Abkühlen und dem Erstarren der Schmelze eine hervorragende Anfangsfestigkeit auf.

Die erfindungsgemäße Schmelzzusammensetzung weist eine gute Vernetzungsreaktion auf. Im Gegensatz zu bekannten Schmelzklebstoffen ist auch in dicken Schichten eine durchgehende schnelle Vernetzung gegeben. Da die Vernetzerkomponente homogen zugemischt wird, ist eine gleichmäßige Aushärtung zu beobachten. Die Aushärtung kann auch unter Verarbeitungsbedingungen erfolgen, bei denen eine wasserbasierte Vernetzung verlangsamt wird.

Die erfindungsgemäße 2K-Zusammensetzung kann für verschiedene Anwendungen eingesetzt werden. Beispielsweise wird die erfindungsgemäße Zusammensetzung als schnell vernetzender Schmelzklebstoff eingesetzt. Der Klebstoff kann in Form einer Raupe aufgetragen werden. Danach werden die Substrate zusammengefügt. Bei dem Abkühlen wird die Schmelze wieder fest und entwickelt schnell eine gute Anfangfestigkeit (green strength). Danach kann das verklebte Teil weiterbefördert, gelagert oder weiterverarbeitet werden. Die Haftkraft ist ausreichend, um bei den üblichen Bearbeitungsvorgängen ein Verrutschen der verklebten Teile zu verhindern.

Eine andere Ausführungsform ist das Auftragen der erfindungsgemäßen Zusammensetzung als Dichtmasse. Dabei kann die Mischung in vorgebildete Spalten, Nuten oder Fugen eingebracht werden. Dabei wird dann durch Abkühlung eine hohe Anfangsfestigkeit aufgebaut, die Vernetzung verläuft beschleunigt.

Eine andere Anwendungsmöglichkeit ist die Verwendung als Vergussmasse. Beispielsweise ist es möglich, verschiedene Substrate in einer vorgegebenen Form anzuordnen und diese dann mit der flüssigen Zusammensetzung zu fixieren. Durch eine beschleunigte Durchhärtung ist eine erhöhte Taktrate möglich.

Die erfindungsgemäßen Zusammensetzungen können zum Verkleben von verschiedenen Substraten eingesetzt werden. Beispielsweise können starre Substrate, wie Glas, Aluminium, Metall, Keramik, Kunststoff oder Holzsubstrate, ggf. auch mit lackierten Oberflächen oder anderen beschichteten Oberflächen miteinander verklebt werden. Weiterhin können auch flexible Substrate wie Kunststofffolien oder Metallfolien miteinander oder mit festen Substraten verklebt werden. Es können vollflächige Verklebungen hergestellt werden, es ist ebenfalls möglich, dass am Rand von festen Substraten ein Streifen des erfindungsgemäßen Klebstoffs aufgetragen wird, der so auf einem begrenzten Gebiet mit einem anderen Substrat verklebt wird. Dabei kann der Klebstoff auch in dickerer Schicht eingesetzt werden.

Die erfindungsgemäß verklebten Substrate weisen eine hohe Temperatur-, Licht-, und Witterungs-Stabilität auf. Auch unter dauerhafter UV-Bestrahlung, z.B. bei Fotovoltaikanlagen oder ihren Bestandteilen ist kein Abbau der Polymeren des Klebstoffs zu beobachten. Ebenso ist die Haftung zu dem Untergrund stabil. Ein weiterer Vorteil ist die hohe Flexibilität des Klebstoffs. Der Klebstoff bleibt auch bei erhöhter Temperatur bei äußerer Bewitterung der verklebten Substrate elastisch. Mögliche thermische Ausdehnungen der Substrate untereinander führen nicht zu einem Brechen der Verklebung.

Durch die erfindungsgemäße Auswahl der Rohstoffe werden über Silangruppen vernetzbare Klebstoffe erhalten, die eine hohe Anfangsfestigkeit ausbilden und so einen schnelleren Verarbeitungsprozess erlauben. Durch das Untermischen einer Härterkomponente wird eine schnelle Vernetzung und Durchhärtung erzielt. Das kann auch in einer Arbeitsumgebung erreicht werden, die nur eine geringe Luftfeuchtigkeit aufweist.

Die erfindungsgemäßen Zusammensetzungen können in verschiedenen Bereichen angewendet werden. Beispielsweise können sie im Baubereich, als Konstruktionsklebstoff für Anlagenteile oder zum Verkleben von flexiblen Folien mit festen Substraten eingesetzt werden.

### Beispiele:

**Beispiel 1: (Mengenangabe in Gewichtsteilen)**

| | Komponente A | Komponente B |
|---|---|---|
| Silanmodifiziertes Prepolymer | 33 | |
| Weichmacher 1 | 9 | |
| Weichmacher 2 | | 51 |
| Stabilisator | 0,5 | |
| Rheologiehilfsmittel | 3 | |
| 10 % Tyloselösung in Wasser | 0 | 10 |
| Titandioxid | 5,6 | |
| Kreide | 40,1 | 39 |
| Lichtschutzmittel | 0,1 | |
| Festes Zusatzmittel | 5,6 | |
| Trocknungsmittel | 1,5 | |
| Haftvermittler | 1,6 | |

| | |
|---|---|
| Weichmacher 1 : | Mesamoll |
| Weichmacher 2 : | PPG, Acclaim 6300 |
| Stabilisator: | Tinuvin 770 |
| Trocknungsmittel : | Silan VTMO |
| Haftvermittler : | Silan AMMO |
| Rheologiehilfsmittel: | Disparlon 6500 |
| Festes Zusatzmittel: | Arkon P125 (festes Kohlenwasserstoffharz) |
| Prepolymer : | Geniosil STP-E30 |
| Kreide: | Socal U1S1 |

Komponente A und B werden vor dem Auftragen bei 70 °C in einem Statik-Mischer in einem Mengenverhältnis A:B = 10 : 1 gemischt.
Die Mischung wird unmittelbar aufgetragen.
Nach 48 Stunden ist die Zusammensetzung ausgehärtet und zeigt ihre mechanischen Endeigenschaften.

### Vergleich:

### Beispiel 1: 2K- Schmelzklebstoff

Vergleichsbeispiel 2: 1K Schmelzklebstoff aus WO 2010/108716, Beispiel 1
Vergleichsbeispiel 3: kommerzielles pastöses 2K-System

| | Beispiel1 | Vergleichsbeispiel 2 | Vergleichsbeispiel 3 |
|---|---|---|---|
| Position tack / 300g | + | + | - |
| Position Tack / 1000g | + | + | - |
| Zugscherfestigkeit 2 Std | > 1 MPa | 0,1 MPA | 0,7 MPa |
| Zugscherfestigkeit 14 Tage | 2,5 MPa | 2,5 MPa | 2,5 MPa |

Zugscherfestigkeit nach ISO 4587,
Alu 99 Substrat, 20 x 25 x 2 mm
2 Std. bei 23 °C / 50 % rel. Luftfeuchtigkeit, oder
14 Tage bei 23 °C / 50 % rel. Luftfeuchtigkeit.
Test bei 23°C, 50 mm/min

### Anfangsfestigkeit (Position tack):

Auf ein gereinigtes starres Substrat (Al-Metall) wird der Klebstoff aufgetragen (2 mm dick) und unmittelbar danach mit einem zweiten gleichartigen Substrat verklebt. Die verklebte Fläche beträgt 100 x 15 mm.
Nach 5 min. Wartezeit wird ein Substratteil senkrecht aufgehängt und an dem anderen das Gewicht (300 g bzw. 1000 g) befestigt. Es wird die Zeit bis zum Abrutschen bestimmt. Der Test wird bei 23 °C durchgeführt.

Bei flüssigviskosen Klebstoffen rutscht das zweite Substrat nach 10 sec ab.

Bei Schmelzklebstoffen (1K) ist keine schnelle Zugscherfestigkeit gegeben.
Bei dem erfindungsgemäßen Beispiel sind beide Tests besser als in den Vergleichsversuchen.

## Patentansprüche

1. Feuchtigkeitshärtende 2K-Zusammensetzung bestehend aus
einer Komponente A enthaltend mindestens ein Polyoxyalkylen- und/oder Polyacrylat-Prepolymer mit mindestens einer hydrolysierbaren Silangruppe, welches bei Raumtemperatur (25°C) flüssig ist, sowie mindestens ein bei Raumtemperatur (25°C) festes inertes Zusatzmittel mit einem Erweichungspunkt von 40 bis 150 °C (gemessen nach DIN ISO 4625), ausgewählt aus Kohlenwasserstoffen, Polyestern oder Polyamiden, und
einer Komponente B, die eine Viskosität von 5000 bis 800000 mPas bei 25°C (gemessen nach Brookfield, EN ISO 2555) aufweist, enthaltend mindestens eine für die Prepolymere vernetzende Verbindung,
wobei die 2K-Zusammensetzung und Komponente A jeweils Schmelzklebstoffeigenschaften aufweisen,
wobei die Zusammensetzung Metallkatalysatorfrei ist und
die Komponente B enthält
- 0 bis 30 Gew.-% einer oder mehrerer Silan-vernetzbarer Verbindungen,
- 2 bis 60 Gew.-% wasserabsorbierende Substanzen,
- 10 bis 60 Gew.-% Hilfsstoffe und Additive,
- 0,5 bis 15 Gew.-% Wasser,
wobei die Summe 100 % betragen soll.

2. 2K-Zusammensetzung nach Anspruch 1, **dadurch gekennzeichnet, dass** die Komponente A bei 70 bis 180 °C geschmolzen werden kann und Komponenten B eine Viskosität von 20000 bis 800000 mPas bei 25°C (gemessen nach Brookfield, EN ISO 2555) aufweist.

3. 2K-Zusammensetzung nach Anspruch 1 oder 2, **dadurch gekennzeichnet, dass** die Zusammensetzung Harze, Weichmacher, Stabilisatoren, Wasser lösende oder Wasser absorbierende Substanzen, Pigmente oder Füllstoffe, Verdickungsmittel und/ oder Katalysatoren enthält.

4. 2K-Zusammensetzung nach einem der Ansprüche 1 bis 3, **dadurch gekennzeichnet, dass** die Hilfsstoffe und Additive Weichmacher sind.

5. Verfahren zum Verkleben von zwei Substraten mit einer vernetzenden 2K- Zusammensetzung nach einem der Ansprüche 1 bis 4.

6. Verfahren nach Anspruch 5, **dadurch gekennzeichnet, dass** Komponente A aufgeschmolzen wird und in die Schmelze Komponente B homogen eingemischt wird.

7. Verfahren nach Anspruch 5 oder 6, **dadurch gekennzeichnet, dass** die Misch- und Applikationstemperatur der 2K-Zusammensetzung zwischen 70 und 135°C beträgt.

8. Verwendung einer 2K-Zusammensetzung nach einem der Ansprüche 1 bis 4 zum Verkleben von Glas-, Metall-, Keramik-, Holz, und/oder Kunststoffsubstraten.

## Claims

1. A moisture-curing two-component composition consisting of
a component A containing at least one polyoxyalkylene and/or polyacrylate prepolymer which has at least one hydrolyzable silane group and is liquid at room temperature (25 °C), and at least one inert admixture which is solid at room temperature (25 °C) and has a softening point of 40 to 150 °C (measured according to DIN ISO 4625), selected from hydrocarbons, polyesters or polyamides, and
a component B which has a viscosity of 5,000 to 800,000 mPas at 25 °C (measured according to Brookfield, EN ISO 2555) and contains at least one compound that crosslinks the prepolymers,
wherein the two-component composition and component A each have hot-melt adhesive properties,
wherein the composition is free of metal catalysts and
component B contains
- 0 to 30 wt.% of one or more silane-crosslinkable compounds,
- 2 to 60 wt.% of water-absorbing substances,
- 10 to 60 wt.% of auxiliaries and additives,
- 0.5 to 15 wt.% of water,
the sum having to amount to 100%.

2. The two-component composition according to claim 1, **characterized in that** component A can be melted at 70 to 180 °C and component B has a viscosity of 20,000 to 800,000 mPas at 25 °C (measured according to Brookfield, EN ISO 2555).

3. The two-component composition according to claim 1 or 2, **characterized in that** the composition contains resins, plasticizers, stabilizers, water-soluble or water-absorbing substances, pigments or fillers, thickeners and/or catalysts.

4. The two-component composition according to one of claims 1 to 3, **characterized in that** the auxiliaries and additives are plasticizers.

5. A method for bonding two substrates using a crosslinking two-component composition according to one of claims 1 to 4.

6. The method according to claim 5, **characterized in that** component A is melted and component B is mixed homogeneously into the melt.

7. The method according to claim 5 or 6, **characterized in that** the mixing and application temperature of the two-component composition is between 70 and 135 °C.

8. The use of a two-component composition according to one of claims 1 to 4 for bonding glass, metal, ceramic, wood and/or plastics substrates.

## Revendications

1. Composition 2K durcissant à l'humidité constituée d'un constituant A contenant au moins un prépolymère de polyoxyalkylène et/ou de polyacrylate comportant au moins un groupe silane hydrolysable, lequel est liquide à température ambiante (25 °C), ainsi qu'au moins un adjuvant inerte solide à température ambiante (25 °C) présentant un point de ramollissement de 40 à 150 °C (mesuré selon DIN ISO 4625), choisi parmi les hydrocarbures, les polyesters ou les polyamides, et un constituant B, lequel présente une viscosité de 5 000 à 800 000 mPas à 25 °C (mesurée selon Brookfield, EN ISO 2555), contenant au moins un composé réticulant pour les prépolymères, où la composition 2K et le constituant A présentent respectivement des propriétés adhésives thermofusibles, où la composition est exempte de catalyseurs métalliques et le constituant B contient
- 0 à 30 % en poids d'au moins un composé réticulables au silane,
- 2 à 60 % en poids de substances absorbant l'eau,
- 10 à 60 % en poids d'adjuvants et d'additifs,
- 0,5 à 15 % en poids d'eau,
où le total est de 100 %.

2. Composition 2K selon la revendication 1, **caractérisée en ce que** le constituant A peut être fondu entre 70 et 180 °C et le constituant B présente une viscosité de 20 000 à 800 000 mPas à 25 °C (mesurée selon Brookfield, EN ISO 2555).

3. Composition 2K selon la revendication 1 ou 2, **caractérisée en ce que** la composition contient des résines, des plastifiants, des stabilisants, des substances dissolvant dans l'eau ou absorbant l'eau, des pigments ou des matières de charge, des épaississants et/ou des catalyseurs.

4. Composition 2K selon l'une quelconque des revendications 1 à 3, **caractérisée en ce que** les adjuvants et les additifs sont des plastifiants.

5. Procédé permettant de coller deux substrats avec une composition 2K réticulante selon l'une quelconque des revendications 1 à 4.

6. Procédé selon la revendication 5, **caractérisé en ce que** le constituant A est fondu et le constituant B est mélangé de façon homogène dans la matière fondue.

7. Procédé selon la revendication 5 ou 6, **caractérisé en ce que** la température de mélange et d'application de la composition 2K est comprise entre 70 et 135 °C.

8. Utilisation d'une composition 2K selon l'une quelconque des revendications 1 à 4 permettant de coller des substrats en verre, en métal, en céramique, en bois et/ou en plastique.
